# FASCICULE DE BREVET EUROPEEN

(11) **EP 0 419 381 B1**
(45) Date de publication et mention de la délivrance du brevet: **29.11.1995**
(21) Numéro de dépôt: 90420409.6
(22) Date de dépôt: 18.09.1990
(51) Int. Cl.: G06F 7/49

(54) **Circuit de détermination de valeur absolue pour des nombres exprimés en chiffres signés à base 2**
Absolutwertbestimmungsschaltung für Vorzeichenzifferzahlen mit Grundzahl 2
Absolute value determination circuit for radix-2 signed-digit numbers

(30) Priorité: 22.09.1989 FR 8912722
(43) Date de publication de la demande: 27.03.1991
(73) Titulaire: FRANCE TELECOM, 75015 Paris (FR)
(72) Inventeur: Privat, Gilles, F-38240 Meylan (FR); Renaudin, Marc, F-38170 Seyssinet (FR); Conq, Bernard, F-38240 Meylan (FR)
(74) Mandataire: de Beaumont, Michel

(56) Documents cités:
- PROCEEDINGS OF THE IEEE, vol. 54, no. 12, décembre 1966, pages 1911-1919; AVIZIENIS: "Arithmetic microsystems", chapter II: Signed-digit arithmetic
- ELECTRICAL DESIGN NEWS, vol. 18, no. 12, 20 juin 1973, pages 85,87; W.T. ADAMS: "Digital absolute-value circuit"

## Description

La présente invention concerne le domaine des calculateurs.

Usuellement, les calculateurs fonctionnent sur la base de nombres positifs codés en binaire, c'est-à-dire que chaque chiffre (0 ou 1) d'un nombre correspond à une puissance de 2.

Quand on veut traiter des nombres positifs ou négatifs, il existe des systèmes de codage dans lesquels on utilise des nombres en binaire simple auxquels on adjoint un bit de signe.

On considérera ici un autre type de codage à base 2 dit codage à chiffres signés d'Avizienis décrit dans PROCEEDING OF THE IEEE, vol. 54, no. 12, décembre 1966, pages 1911-1919; AVIZIENIS: "Arithmetic microsystems for the synthesis of function generators". On part d'une représentation dans laquelle chaque chiffre peut prendre la valeur 1, 0 ou -1 et correspondre à la multiplication par cette valeur d'une puissance de 2. Ainsi, le chiffre 0101⁻0 correspondra à la valeur 0+8+0-2+0 soit la valeur 6. On notera que cette valeur 6 aurait également pu s'écrire 00110. Le code et redondant puisque chaque nombre peut s'exprimer de plusieurs façons.

L'un des avantages de ce code est que l'on passe simplement d'un nombre positif au nombre négatif correspondant en inversant chacun des bits. Par exemple on passera de +6 à -6 en passant de 0101⁻0 à 01⁻010 ou bien de 0110 à 01⁻1⁻0.

Dans le cas de l'utilisation d'une telle représentation d'Avizienis pour un calculateur dans lequel on souhaite n'utiliser que deux états de signaux (des états haut et bas ou 0 et 1) on ne peut utiliser directement la représentation susmentionée qui correspond à trois états (0,1 et -1). En conséquence, chaque chiffre de la représentation d'Avizienis est traduit par un code à deux bits :
10 = 1-0 pour la valeur 1
01 = 0-1 pour la valeur 1⁻
00 ou 11 = 0-0 ou 1-1 pour la valeur 0.

La présente invention vise à prévoir dans un calculateur adapté à cette représentation codée un circuit de détermination de la valeur absolue d'un nombre.

Pour atteindre cet objet, la présente invention prévoit un circuit de détermination de la valeur absolue d'un nombre, appliqué à des nombres exprimés selon une représentation en chiffres signés à base 2 dont chaque chiffre est codé par deux bits, le premier correspondant à une valeur positive et le deuxième à une valeur négative la valeur du chiffre étant égale à la somme de la valeur des deux bits, le circuit comprenant des moyens de détermination pour déterminer le signe du chiffre non nul de poids le plus élevé, et des moyens d'inversion pour inverser ou non d'ordre les deux bits de ce chiffre non nul de poids le plus élevé et les deux bits de chaque chiffre suivant selon que le signe de ce chiffre non nul de poids le plus élevé est respectivement négatif ou positif, afin de déterminer la valeur absolue.

Selon un mode de réalisation de la présente invention, ce circuit comprend une cellule agissant sur chaque chiffre et comprenant comme moyens de détermination une première paire de multiplexeurs à deux entrées et une sortie dont chacun reçoit sur sa première entrée l'un de deux signaux d'indication de signe provenant du traitement du chiffre précédent et sur sa deuxième entrée l'un des bits du chiffre considéré, ces multiplexeurs fournissant en sortie, en tant que signaux d'indication de signe pour le chiffre suivant, le signal sur leur première ou leur deuxième entrée en fonction de la valeur d'un même signal de commande, et une porte OU Exclusif recevant les deux signaux d'indication de signe du chiffre précédent et fournissant ledit signal de commande pour la première paire de multiplexeurs.

Selon un mode de réalisation de la présente invention, ladite cellule comprend en tant que moyens d'inversion une deuxième paire de multiplexeurs à deux entrées et une sortie recevant sur leurs entrées les deux bits du chiffre considéré et fournissant en sortie ces bits tels quels on inversés d'ordre selon la valeur d'un signal de commande correspondant à la sortie du deuxième multiplexeur de la première paire de multiplexeurs.

Ces objets, caractéristiques et avantages ainsi que d'autres de la présente invention seront exposés plus en détail dans la description suivante de modes de réalisation particuliers faite en relation avec les figures jointes parmi lesquelles :
la figure 1 illustre de façon générale un circuit de détermination de valeur absolue de type parallèle selon la présente invention ;
la figure 2 représente une cellule du circuit de la figure 1 ; et
la figure 3 représente un circuit de détermination de valeur absolue selon la présente invention de type série.

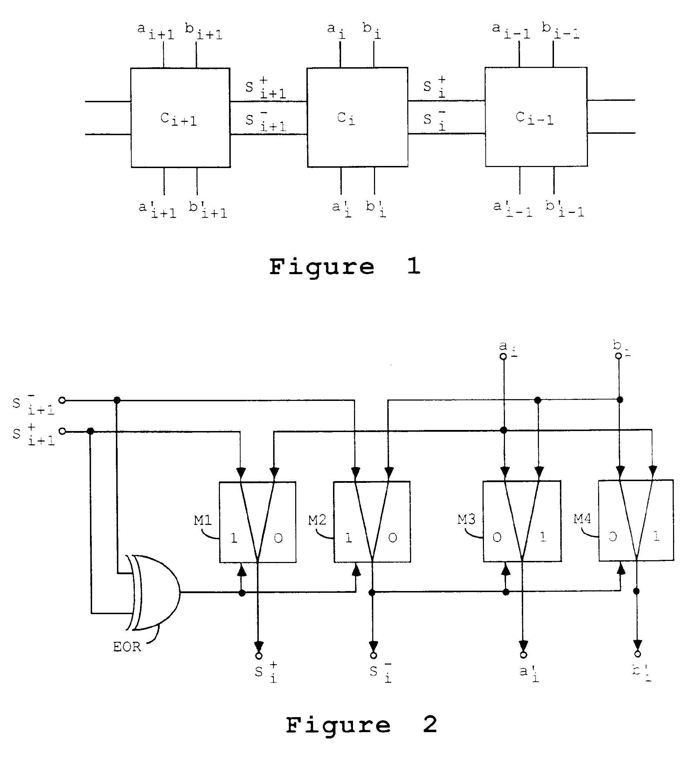

La figure 1 représente l'organisation générale d'un circuit de détermination de valeur absolue selon la présente invention fonctionnant en mode parallèle. Chaque chiffre, composé de deux bits arrive sur une cellule Cᵢ. On a représenté en figure 1 trois cellules Cᵢ₊₁, Cᵢ, Cᵢ₋₁ correspondant à trois chiffres successifs de poids successivement décroissant, chaque chiffre comprenant 2 bits aᵢ et bᵢ, les bits aᵢ₊₁ et bᵢ₊₁ correspondant au chiffre de poids le plus élevé. Chaque cellule, par exemple la cellule Cᵢ, comprend deux entrées aᵢ et bᵢ pour les deux bits du chiffre de poids correspondant et deux sorties a′ᵢ et b′ᵢ qui correspondent aux entrées aᵢ et bᵢ dans cet ordre ou dans l'ordre inverse selon que le nombre considéré est positif ou négatif, c'est-à-dire doit être maintenu tel quel ou doit être inversé. La commande de la cellule Cᵢ, pour déterminer un maintien ou une inversion, est fixé par des signaux d'indication de signe : s⁺ᵢ₊₁ et s⁻ᵢ₋₁ en entrée et s⁺ᵢ et s⁻ᵢ en sortie. A partir du moment où le signe du nombre a été déterminé en considérant le signe de son chiffre de poids le plus élevé, les signaux s⁺ᵢ et s⁻ᵢ ne varient plus.

Le fonctionnement d'une cellule sera mieux compris en relation avec la figure 2 qui en illustre un mode de réalisation. Cette cellule comprend une première paire de multiplexeurs M1 et M2 destinés à fournir les bits d'indication de signe s⁺ᵢ et s⁻ᵢ et une deuxième paire de multiplexeurs M3 et M4 destinés à fournir le signal de sortie a′ᵢ, b′ᵢ, inversé ou non par rapport à aᵢ, bᵢ.
Le multiplexeur M1 reçoit sur sa première entrée le signal s⁺ᵢ₊₁ et sa deuxième entrée le signal aᵢ ;
le multiplexeur M2 reçoit sur sa première entrée le signal s⁻ᵢ₊₁ et sur sa deuxième entrée le signal bᵢ ;
le multiplexeur M3 reçoit sur sa première entrée le signal aᵢ et sur sa deuxième entrée le signal bᵢ ; et
le multiplexeur M4 reçoit sur sa première entrée le signal bᵢ et sur sa deuxième entrée le signal aᵢ.

En outre, chacun des multiplexeurs reçoit un signal de commande. Les multiplexeurs M1 et M2 reçoivent un même signal de commande correspondant au résultat d'un opération OU Exclusif (EOR) réalisée sur les signaux s⁻ᵢ₊₁ et s⁺ᵢ₊₁ et les multiplexeurs M3 et M4 reçoivent un même signal de commande correspondant à la sortie du multiplexeur M2.

Quand leur signal de commande est à 1, les multiplexeurs M1 et M2 fournissent sur leurs sorties s⁺ᵢ et s⁻ᵢ les signaux s⁺ᵢ₊₁ et s⁻ᵢ₊₁. Quand leur signal de commande est à 0, ces multiplexeurs fournissent sur leurs sorties s⁺ᵢ et s⁻ᵢ les signaux aᵢ et bᵢ.

Quand leur signal de commande est à 0, les multiplexeurs M3 et M4 fournissent sur leurs sorties a′ᵢ et b′ᵢ les signaux aᵢ et bᵢ et quand leur signal de commande est à 1 les signaux inversés bᵢ et aᵢ.

Si l'on se rappelle la définition donnée précédemment du code, quand un chiffre est égal à 0, ses deux bits aᵢ et bᵢ sont identiques (tous deux égaux à 0 ou tous deux égaux à 1), quand un chiffre est égal à 1, son bit aᵢ est égal à 1 et son bit bᵢ à zéro, et quand un chiffre est égal à 1⁻ son bit aᵢ est égal à zéro et son bit bᵢ à 1.

La porte EOR fournit une sortie à zéro tant que les bits incidents sont identiques, c'est-à-dire que les chiffres de poids fort précédemment rencontrés sont nuls et les sorties s⁺ᵢ et s⁻ᵢ correspondent alors, respectivement, aux chiffres aᵢ et bᵢ, c'est-à-dire sont identiques. Dès que l'on rencontre un chiffre de poids fort non nul, la sortie de la porte EOR sera à 1 pour la cellule correspondant au chiffre suivant et pour toutes les cellules ultérieures. On trouvera donc comme valeur de s⁺ᵢ... s⁺₀ la valeur aᵢ du chiffre non nul le plus significatif et pour s⁻ᵢ... s⁻₀ la valeur bᵢ du chiffre non nul le plus significatif. Comme les multiplexeurs M3 et M4 sont commandés par le bit d'indication de signe s⁻ᵢ en sortie du multiplexeur M2, tous les multiplexeurs M3 et M4 des chiffres suivant le chiffre non nul le plus significatif seront commandés par un signal 0 (pas de changement) si le chiffre non nul le plus significatif correspond à 10 (+1) et par un signal 1 (inversion) si le chiffre non nul le plus significatif est 01 (-1), c'est-à-dire qu'il y aura non inversion dans le premier cas entre a′ᵢ et b′ᵢ et aᵢ, bᵢ et inversion dans le second cas, ce qui est le résultat recherché.

On a décrit précédemment en relation avec les figures 1 et 2, un système fonctionnant en parallèle en ce qui concerne l'obtention du nombre inversé ou non (avec toutefois une transmission séquentielle de l'indication de signe s⁺ᵢ, s⁻ᵢ).

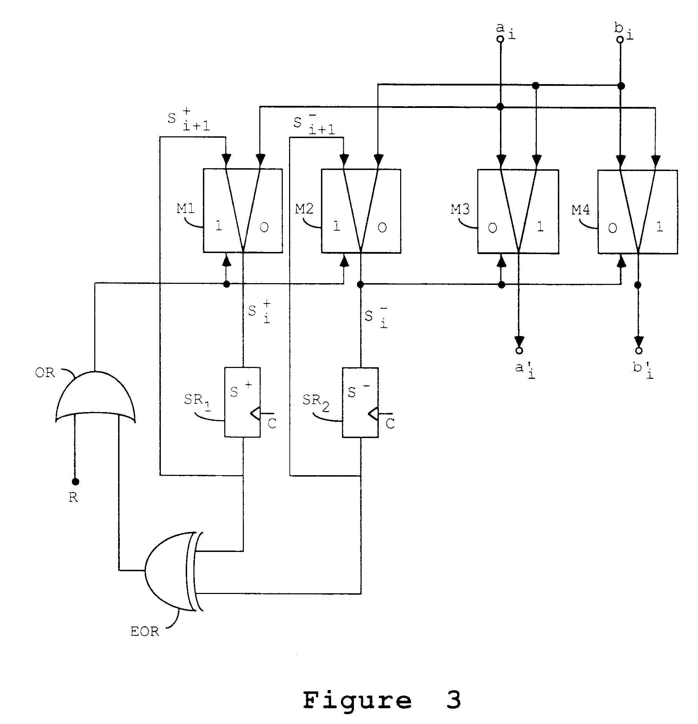

Comme cela est classique, au lieu de faire fonctionner le système en mode parallèle, il est possible de le faire fonctionner en mode série, dans lequel une seule cellule est utilisée et reçoit séquentiellement les chiffres successifs dans l'ordre des chiffres les plus significatifs aux chiffres les moins significatifs. Il faut alors conserver l'information d'indication de signe s⁺ᵢ, s⁻ᵢ. Ceci peut être réalisé en prévoyant des registres SR1 et SR2 en sortie de chacun des multiplexeurs M1 et M2, ces registres pouvant être de simples bascules à mémoire (latch). Le fonctionnement de ce circuit s'explique de lui-même à la lecture du schéma de la figure 3. On notera qu'outre les éléments déjà décrits en relation avec la figure 2, il est rajouté une porte OU (OR) recevant un signal de remise à zéro R pour recaler les multiplexeurs M1 et M2 dans un état correspondant à l'arrivée d'un chiffre à deux bits identiques lors de la transition entre deux nombres successifs.

## Revendications

1. Circuit de détermination de la valeur absolue d'un nombre, appliqué à des nombres exprimés selon une représentation en chiffres signés à base 2 dont chaque chiffre est codé par deux bits, le premier correspondant à une valeur positive et le deuxième à une valeur négative, la valeur du chiffre étant égale à la somme de la valeur des deux bits, le circuit comprenant :
des moyens de détermination pour déterminer le signe du chiffre non nul de poids le plus élevé,
des moyens d'inversion pour inverser ou non d'ordre les deux bits de ce chiffre non nul de poids le plus élevé et les deux bits de chaque chiffre suivant selon que le signe de ce chiffre non nul de poids le plus élevé est respectivement négatif ou positif, afin de déterminer la valeur absolue.

2. Circuit selon la revendication 1, caractérisé en ce qu'il comprend une cellule agissant sur chaque chiffre et comprenant comme moyens de détermination :
une première paire de multiplexeurs (M1, M2) à deux entrées et une sortie dont chacun reçoit sur sa première entrée l'un de deux signaux d'indication de signe (s⁺ᵢ₊₁, s⁻ᵢ₊₁) provenant du traitement du chiffre précédent et sur sa deuxième entrée l'un des bits (aᵢ, bᵢ) du chiffre considéré, ces multiplexeurs fournissant en sortie, en tant que signaux d'indication de signe (s⁺ᵢ, s⁻ᵢ) pour le chiffre suivant, le signal sur leur première ou leur deuxième entrée en fonction de la valeur d'un même signal de commande, et
une porte OU Exclusif (EOR) recevant les deux signaux d'indication de signe du chiffre précédent et fournissant ledit signal de commande pour la première paire de multiplexeurs.

3. Circuit selon la revendication 2, caractérisé en ce que ladite cellule comprend en tant que moyens d'inversion une deuxième paire de multiplexeurs (M3, M4) à deux entrées et une sortie recevant sur leurs entrées les deux bits (aᵢ, bᵢ) du chiffre considéré et fournissant en sortie (a′ᵢ, b′ᵢ) ces bits tels quels ou inversés d'ordre selon la valeur d'un signal de commande correspondant à la sortie du deuxième multiplexeur (M2) de la première paire de multiplexeurs.

4. Circuit selon la revendication 3, caractérisé en ce qu'une pluralité de cellules sont disposées en parallèle, chacune traitant un chiffre du nombre considéré.

5. Circuit selon la revendication 3, caractérisé en ce qu'il comprend une seule cellule, la valeur de sortie des signaux de détermination de signe étant mémorisée et cette cellule recevant séquentiellement les bits correspondant à chaque chiffre du nombre considéré, dans l'ordre du poids le plus fort au poids le plus faible, pour fournir sous forme série ladite valeur absolue.

## Patentansprüche

1. Schaltung zum Bestimmen des absoluten Wertes einer Zahl, und zwar angewendet auf Zahlen, die gemäß mit Vorzeichen versehenen Ziffern zu der Basis-2 ausgedrückt sind, von denen jede Ziffer durch zwei Bits codiert ist, wobei das erste Bit einem positiven Wert und das zweite Bit einen negativem Wert entspricht, und wobei der Wert der Ziffer gleich der Summe des Wertes der zwei Bits ist, wobei die Schaltung folgendes aufweist:
Bestimmungsmittel zum Bestimmen des Vorzeichens der wesentlichsten bzw. signifikantesten von Null verschiedenen Ziffer,
Umkehr- bzw. Inversionsmittel zum Umkehren bzw. Invertieren oder nicht der Reihenfolge der zwei Bits der von Null verschiedenen signifikantesten Ziffer und der zwei Bits jeder darauffolgenden Ziffer, und zwar abhängig davon, ob das Vorzeichen der von Null verschiedenen signifikantesten Ziffer positiv bzw. negativ ist, um den absoluten Wert zu bestimmen.

2. Schaltung nach Anspruch 1, **gekennzeichnet** dadurch, daß sie eine Zelle aufweist, die auf jede Ziffer wirkt, und als Bestimmungsmittel folgendes aufweist:
ein Paar von Multiplexern (M1, M2) mit zwei Eingängen und einem Ausgang, von denen jeder an seinem ersten Eingang eines der zwei Vorzeichenanzeigesignale und an seinem zweiten Ausgang eines der Bits (aᵢ, bᵢ) der betrachteten Ziffer empfängt, wobei die Multiplexer an ihrem Ausgang als Vorzeichenanzeigesignale (s⁺i, s⁻i) für die nächste Ziffer das Signal an ihrem ersten oder zweiten Eingang als eine Funktion des Wertes eines gleichen Steuersignals vorsehen, und
ein "Exklusives-ODER" Gatter (EOR), das die zwei Vorzeichenanzeigesignale der vorhergehenden Ziffer empfängt und das Steuersignal für das erste Paar von Multiplexern vorsieht.

3. Schaltung nach Anspruch 2, dadurch gekennzeichnet, daß die Zelle als Invertiermittel ein zweites Paar von Multiplexern (M3, M4) aufweist, und zwar mit zwei Eingängen und einem Ausgang, die an ihren Eingängen die zwei Bits (ai, bi) der betrachteten Ziffer empfangen und an ihrem Ausgang (a′ᵢ, b′ᵢ) die nicht abgeänderten bzw. nicht modifizierten Bits oder die Bits, deren Reihenfolge umgekehrt wurde, vorsehen, und zwar abhängig von dem Wert eines Steuersignals entsprechend der Ausgangsgröße des zweiten Multiplexers (M2) des ersten Paars von Multiplexern.

4. Schaltung nach Anspruch 3, dadurch gekennzueichnet, daß eine Vielzahl von Zellen parallel angeordnet ist, wobei jede Zelle eine Ziffer der betrachteten Zahl verarbeitet.

5. Schaltung nach Anspruch 3, dadurch gekennzeichnet, daß sie eine einzelne Zelle aufweist, der Ausgangswert der Vorzeichenbestimmungssignale gespeichert wird, und, daß die Zelle sequentiell die Bits, die jeder Ziffer der betrachteten Zahl entsprechen, empfängt, und zwar von dem signifikantesten zu dem am wenigsten signifikanten Bit, um seriell den absoluten Wert vorzusehen.

## Claims

1. A circuit for determining the absolute value of a number, applied to numbers expressed according to base-2 signed digits, each digit of which is encoded by two bits, the first bit corresponding to a positive value and the second bit corresponding to a negative value, the value of the digit being equal to the sum of the value of the two bits, the circuit comprising:
determination means for determining the sign of the most significant non-null digit,
inversion means for inverting or not the order of the two bits of said non-null most significant digit and the two bits of each subsequent digit depending on whether the sign of said non-null most significant digit is positive or negative, respectively, in order to determine the absolute value.

2. The circuit of claim 1, characterized in that it comprises a cell acting on each digit, and comprising as determination means:
a first pair of multiplexers (M1, M2) having two inputs and one output, each of which receives at its first input one of the two sign indication signals and, at its second input, one of the bits (aᵢ, bᵢ) of the considered digit, said multiplexers providing at their output, as sign indication signals (s⁺i, s⁻i) for the next digit, the signal at their first or second input as a function of the value of a same control signal, and
an Exclusive-OR gate (EOR) receiving the two sign indication signals of the preceding digit and providing said control signal for the first pair of multiplexers.

3. The circuit of claim 2, characterized in that said cell comprises as inverting means a second pair of multiplexers (M3, M4), having two inputs and one output, receiving at their inputs the two bits (ai, bi) of the considered digit and providing at their output (a′ᵢ, b′ᵢ) said unmodified bits or bits whose order is inverted depending upon the value of a control signal corresponding to the output of the second multiplexer (M2) of the first pair of multiplexers.

4. The circuit of claim 3, characterized in that a plurality of cells are disposed in parallel, each cell processing a digit of the considered number.

5. The circuit of claim 3, characterized in that it comprises a single cell, the output value of the sign determination signals being stored, and said cell sequentially receiving the bits corresponding to each digit of the considered number, from the most significant to the least significant bit to serially provide said absolute value.
